# EUROPEAN PATENT APPLICATION

(11) **EP 1 838 115 A2**
(43) Date of publication of application: **26.09.2007**
(21) Application number: 07250973.0
(22) Date of filing: 08.03.2007
(51) Int. Cl.: H04Q 7/28

(54) **A PoC system and method PoC communication**

(30) Priority: 23.03.2006 JP 2006080919
(71) Applicant: NEC Corporation, Minato-ku Tokyo 108-8001 (JP)
(72) Inventor: Miyata, Koushi c/o NEC Corporation, Tokyo 108-8001 (JP)
(74) Representative: Robson, Aidan John

(57) **Abstract**

Provided is, for example, a push-to-talk over cellular (PoC) system including a first mobile terminal (10), a second mobile terminal (20), and a management center apparatus (30), in which: the first mobile terminal (10) includes a first wireless communications circuit to receive a PoC communications start response including an identifier of the second mobile terminal (20) from the management center apparatus (30), and a PoC communications circuit to communicate with the second mobile terminal through PoC communications; the second mobile terminal (20) includes a second wireless communications circuit to transmit a group-participation request including the identifier of the second mobile terminal to the management center apparatus (30); and the management center apparatus (30) includes a controller to register the identifier of the second mobile terminal.

## Description

### BACKGROUND OF THE INVENTION

### 1. Field of the Invention

The present invention relates to a PoC system and a communication method therefor, and more particularly, to a free participation type PoC system for carrying out PoC communications from a mobile terminal which can be used by a push-to-talk over cellular (PoC) system to another mobile terminal which can be used by PoC system whose phone number is not acknowledged, and a communication method therefor.

### 2. Description of the Related Art

In recent years, domestic mobile network service providers have started push-to-talk over cellular (PoC) services one after the other, and it is expected that popularization of PoC services will lead to development of services using PoC in the future. Different from conventional one-to-one voice communication services, the PoC services enable simultaneous conversation among a plurality of users by using a mobile terminal as a transceiver. In other words, according to the PoC services, voices reach all preregistered users by talking while pressing a button of the mobile terminal, and voices of other users can be heard when the button is released.

According to the PoC, voice data is exchanged by using a packet communication system instead of a line switching system used for normal voice conversation. For example, the PoC establishes a PoC session through a PoC server based on a session initiation protocol (SIP) by using an Internet protocol (IP) network. Then, by using a half-duplex communication system, voice conversation is carried out between terminals which are PoC clients.

A related art of the PoC is disclosed in Japanese Patent Laid-open Application Publication No. 2005-217584 (hereinafter referred to as "related art"). The related art proposes a wireless communications system designed to facilitate participation of a new terminal with respect to group information for establishing wireless communication between specific terminals, to thereby enable a newly-participated user to quickly engage in the wireless communication.

According to the wireless communications system, upon reception of a group application request to establish wireless communications between PoC terminals, a closed user group (CUG) server generates a group table and makes group information having group identification information assigned to the group table to store the information in the CUG server. Then, the CUG server transmits the group identification information to a host PoC terminal. Upon reception of a registration request and the group identification information of the group table from the PoC terminal, the CUG server retrieves and obtains the group table to which the group identification information received from the PoC terminal has been assigned, and automatically registers terminal identification information of the PoC terminal of a registration request destination in the group table.

However, in a case of conventional PoC services, it is necessary for a phone number of a connection destination to be designated or entered when making a PoC call, so it has been impossible to carry out PoC communications with a communication counterpart with an unacknowledged phone number. In other words, in the current PoC service, a PoC caller must know the phone number of the communication counterpart beforehand, so it is difficult to carry out the PoC communications with just anybody. Hence, there is a problem in that the PoC communications can only be carried out when the phone number of the communication counterpart is known beforehand. The related art is not necessarily designed to deal with this situation.

### SUMMARY OF THE INVENTION

An exemplary object of the invention is to provide a PoC system with which PoC communications can be freely made with anyone even when a phone number of a communication counterpart is not known beforehand, and a communication method therefor.

An exemplary aspect of the invention relates to a PoC system including a first mobile terminal, a second mobile terminal, and a management center apparatus, in which: the first mobile terminal can include an identifier receiver to receive an identifier of the second mobile terminal from the management center apparatus, and a PoC communications circuit to communicate with the second mobile terminal through PoC communications; the second mobile terminal can include an identifier transmitter to transmit the identifier of the second mobile terminal to the management center apparatus; and the management center apparatus can include an identifier register to register the identifier of the second mobile terminal.

According to the invention, there can be provided a PoC system with which PoC communications can be freely made with anyone even when a phone number of a communication counterpart is not known beforehand, and a communication method therefor.

### BRIEF DESCRIPTION OF THE DRAWINGS

In the accompanying drawings:
FIG. 1 is a diagram showing an entire configuration of a PoC system according to a first exemplary embodiment;
FIG. 2 is a diagram showing an internal configuration of a host terminal and a guest terminal according to the first exemplary,embodiment;
FIG. 3 is a diagram showing an internal configuration of a management center apparatus according to the first exemplary embodiment;
FIG. 4 is a diagram showing a configuration example of a PoC group maker management table according to the first exemplary embodiment;
FIG. 5 is a diagram showing a configuration example of a PoC group participant management table according to the first exemplary embodiment;
FIG. 6 is a sequential diagram showing an operation of the PoC system according to the first exemplary embodiment;
FIG. 7 is a diagram showing an entire configuration of a PoC system according to a second exemplary embodiment; and
FIG. 8 is a sequential diagram showing an operation of the PoC system according to the second exemplary embodiment.

### DETAILED DESCRIPTION OF THE PREFERRED EMBODIMENTS

### 1. First Exemplary Embodiment

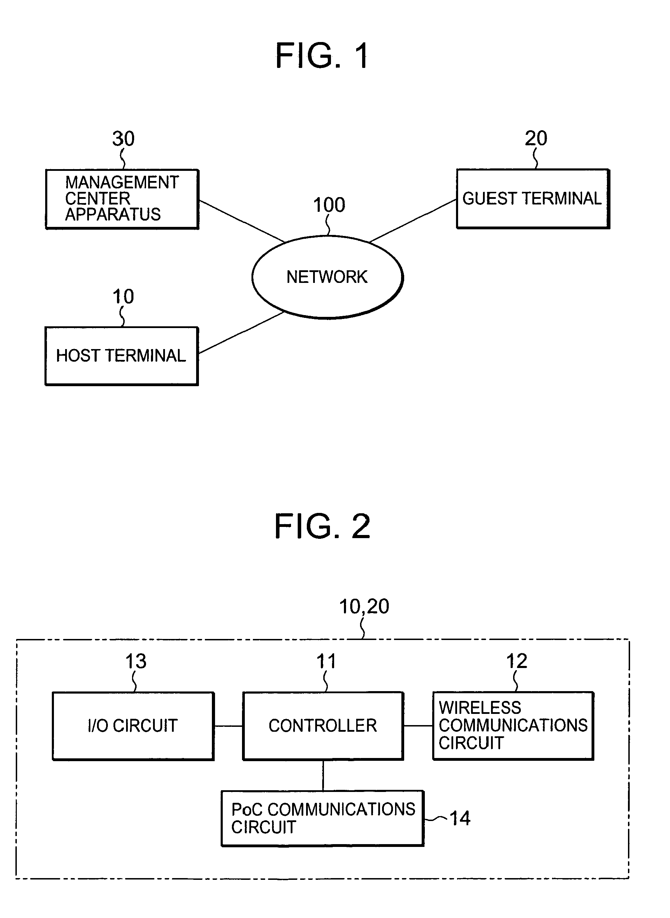

First, a first exemplary embodiment of the present invention will be described by referring to FIGS. 1 to 6.

Referring to FIG. 1, a PoC system of this embodiment includes a host terminal (first mobile terminal) 10 which has a PoC function of enabling PoC communications and which is used by a PoC group originator, a guest terminal (second mobile terminal) 20 which has a PoC function of enabling PoC communications and which is used by a PoC group participant, and a management center apparatus 30. The host terminal 20, the guest terminal 20, and the management center apparatus 30 are interconnected through a network 100 such as the Internet.

For example, the host terminal 10 is a mobile phone or the like having the PoC function, and has a function of accessing the management center apparatus 30 to transfer phone numbers. The host terminal 10 also has a function of requesting a phone number of a group member who becomes a PoC group participant to the management center apparatus 30.

For example, the guest terminal 20 is a mobile phone or the like having the PoC function, and has a function of accessing the management center apparatus 30 to transfer phone numbers.

FIG. 2 shows a configuration example of a PoC terminal which constitutes each of the host and guest terminals 10 and 20. As shown in FIG. 2, each of the host and guest terminals 10 and 20 includes functional units of a controller 11, a wireless communications circuit 12, an I/O circuit 13, and a PoC communications circuit 14.

The controller 11 plays the pivotal role in controlling the entire terminal, and incorporates, e.g., a microcomputer. The controller 11 reads program code preset in a recording medium such as a read-only memory (ROM) to decrypt and execute its-command. Accordingly, the controller 11 controls operations of the circuits 12 to 14. to realize the functions.

The wireless communications circuit 12 includes well-known circuits such as an antenna, a transmission/reception circuit (modulation/demodulation circuit or the like), and a baseband processing circuit, and communicates with a wireless base station (not shown) of the network 100 side by using a predetermined wireless access method such as Code Division Multiple Access (CDMA), Time Division Multiple Access (TDMA), or Frequency Division Multiple Access (FDMA)..

The I/O circuit 13 includes: a voice input and output part having, for example, a microphone and a speaker; an operation part having various operation keys and buttons; and a display part such as a liquid crystal display.

The PoC communications circuit 14 realizes the PoC function in association with operations of the circuits 11 to 13 (e.g., the operation button and a display screen of the I/O circuit 13, a communication function of the wireless communications circuit 12, and the like) of the terminal. For example, the PoC function is provided as PoC communications software (application software or the like operated in an operating system) executed by the microcomputer of the controller 11. For example, the PoC function realized by the PoC communications circuit 14 has a well-known function of starting PoC communications through a PoC server (not shown) of the network 100 to carry out PoC communications with a PoC terminal which participates in a PoC group.

The management center apparatus 30 is an information processor such as a work station/server, and has a function of managing making/deleting or the like of a free participation type PoC group, and associating phone numbers transmitted from the host and guest terminals 10 and 20 with the free participation type PoC group to manage them. The management center apparatus 30 also has a function of transmitting a phone number of a group member in response to a request from the host terminal 10. The management center apparatus 30 may be provided as one or more servers together with other servers such as PoC servers to render PoC services.

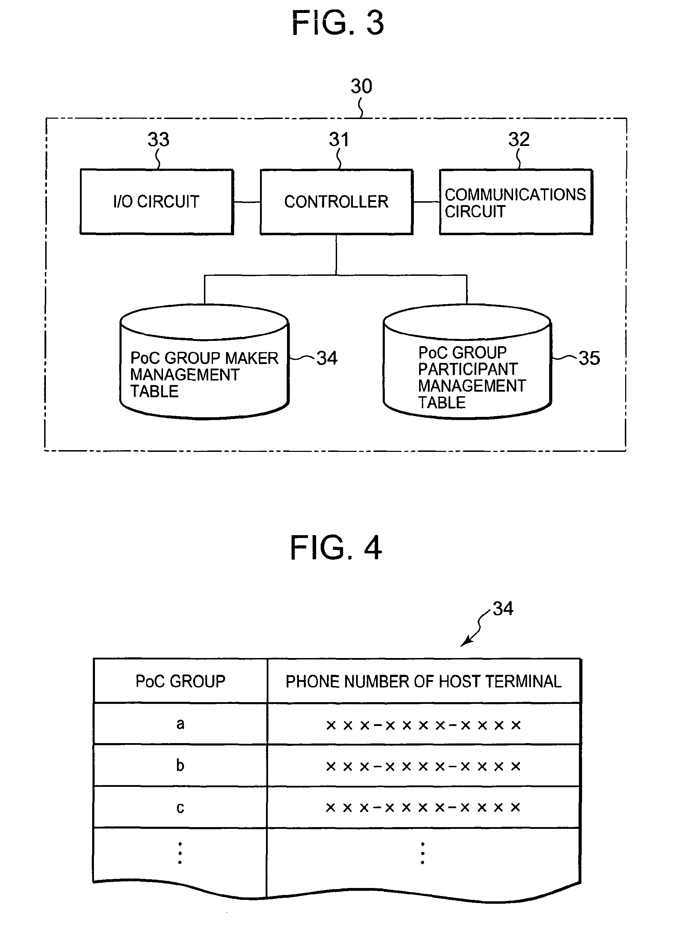

FIG. 3 shows an internal configuration example of the management center apparatus 30. As shown in FIG. 3, the management center apparatus 30 includes functional units of a controller 31, a communications circuit 32, an I/O circuit 33, a PoC group maker management table 34, and a PoC group participant management table 35.

The controller 31 plays the pivotal role in controlling the information processor. The controller 31 includes well-known components such as a central processing unit (CPU), a ROM, a random access memory (RAM), and an input/output (I/O) port based on a computer architecture,' and the CPU reads preset program code to decrypt and execute its command. Accordingly, the controller 31 controls operations of the circuit 32 to 35 to realize the functions.

The communications circuit 32 includes a communications interface through which communications are carried out with the network 100. A wire interface and a wireless interface can both be applied to the communications interface. For example, the communications interface may be a communications modem connected to a public telephone network, a local area network (LAN) interface connected to a wire LAN or a wireless LAN, or the like.

According to this embodiment, the I/O circuit 33 includes a peripheral circuit other than the communications circuit 32, and a recorder such as a hard disk for recording the program code or data.

For example, as shown in FIG. 4, the PoC group maker management table 34 includes a correspondence table for correlating a type of a PoC group (group identification information, group name, or the like) with the phone number of the host terminal 10 which is a maker or the PoC group. The controller 31 controls the table 34. The table 34 is stored in the RAM of the controller 31 or the recorder of the I/O circuit 33.

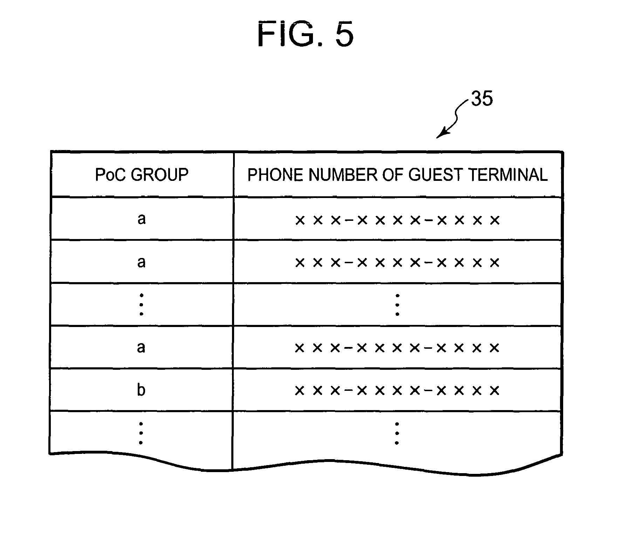

For example, as shown in FIG. 5, the PoC group participant management table 35 includes a correspondence table for correlating a type of a PoC group (group identification information, group name, or the like) made by the host terminal 10 with the phone number of the guest terminal 20 which is a participant in the PoC group. The controller 31 controls the table 35. The table 35 is stored in the RAM of the controller 31 or the recorder of the I/O circuit 33.

The two tables 34 and 35 can be managed as one and the same table by adding the identification information of the host/guest or its corresponding terminal identification information or the like to the other table.

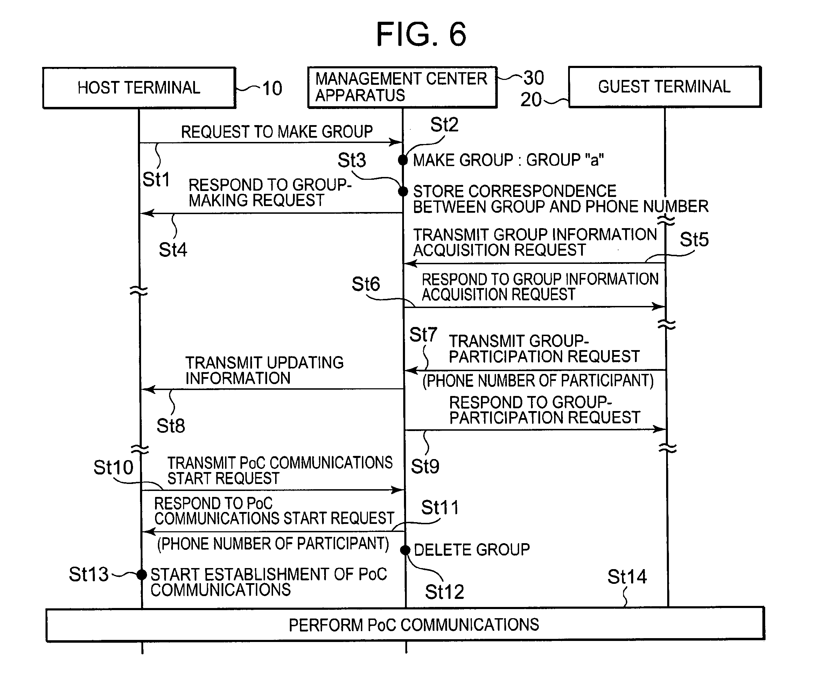

Next, referring to a flowchart of FIG. 6, an operation of this embodiment will be described in detail.

According to this embodiment, first, an optional PoC terminal becomes a host terminal 10 and the management center apparatus 30 for managing a free participation type PoC group makes a free participation type PoC group. Then, an optional PoC terminal that becomes a guest terminal 20 participates in the made free participation type PoC group. Finally, the host terminal 10 obtains a phone number of a participant from the management center apparatus 30, and starts PoC communications by using the phone number.

First, the host terminal 10 transmits, by the PoC communications circuit 14, a request for making a free participation type PoC group to the management center apparatus 30 via the wireless communications circuit 12 through the network 100 (Step St1). Accordingly, after the management center apparatus 30 has received the request via the communications circuit 32, the controller 31 makes a free participation type PoC group "a" (Step St2), and stores correspondence between the made PoC group "a" and the phone number of the host terminal 10 in the PoC group maker management table 34 (Step St3). Subsequently, in response to the PoC group-making request, the management center apparatus 30 returns a message indicating that the requested PoC group "a" has been made by the management center apparatus 30 to the host terminal 10 via the communications circuit 32 through the network 100 (Step St4).

On the other hand, the guest terminal 20 transmits, by the PoC communications circuit 14, a free participation type PoC group information acquisition request to the management center apparatus 30 via the wireless communications circuit 12 through the network 100 (Step St5). After the management center apparatus 30 has received the request via the communications circuit 32, the controller 31 obtains information of all, free participation type PoC groups from the PoC groupmaker management table 34, and returns the obtained information to the guest terminal 20 via the communications circuit 32 through the network 100 (Step St6). In this case, the information of the free participation type PoC groups which is returned by the management center apparatus 30 to the guest terminal 20 may be structured to contain a plurality of items of information of PoC groups.

Subsequently, the guest terminal 20 transmits, by the PoC communications circuit 14, a participation request to participate in the free participation type PoC group "a" to the management center apparatus 30 via the wireless communications circuit 12 through the network 100 (Step St7). In this case, the guest terminal 20 can be configured to transmit its own phone number. After the management center apparatus 30 has received the request via the communications circuit 32, the controller 31 stores correspondence between the free participation type PoC group "a" and the phone number of the guest terminal 20 in the PoC group participant management table 35 to update the table 35. After the phone number of the guest terminal 20 has been updated to the free participation type PoC group "a", the management center apparatus 30 sends the updating information to the host terminal 10 of the corresponding free participation type PoC group "a" via the communications circuit 32 through the network 100 (Step St8). Then, the management center apparatus 30 sends a response to the participation request to the guest terminal 20 via the communications circuit 32 through the network 100 (Step St9).

Subsequently, the host terminal 10 transmits, by the PoC communications circuit 14, a request to start free participation type PoC communications to the management center apparatus 30 via the wireless communications circuit 12 through the network 100 (Step St10). Then, after the management center apparatus 30 has received the request via the communications circuit 32, the controller 31 retrieves and reads, in response to the request, the phone number of the guest terminal 20 participating in the free participation type PoC group "a" of the host terminal 10 from the PoC group participant management table 35 and transmits it to the host terminal 10 via the communications circuit 32 through the network 10 (Step St11). Subsequently, the management center apparatus 30 deletes, by the controller 31, the transmitted phone number of the guest terminal 20 from the PoC group participant management table 35 (Step St12).

Finally, the host terminal 10 becomes an originator, and establishes PoC connection with the guest terminal 20 to start PoC communications by using the phone number of the guest terminal 20 which participates in the PoC group "a", sent from the management center apparatus 30 (Step St13). Accordingly, PoC communications are carried out between the host terminal 10 and the guest terminal 20 (Step St14).

Thus, according to this embodiment, even when a phone number of a PoC communication counterpart is not known beforehand, it is possible to carry out PoC communications with an optional counterpart.

### 2. Second Exemplary Embodiment

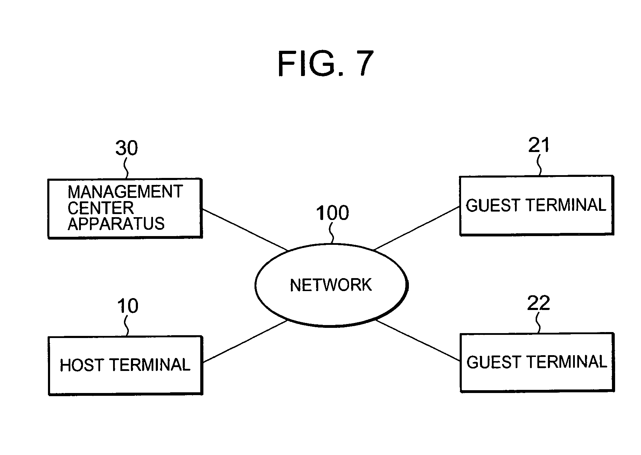

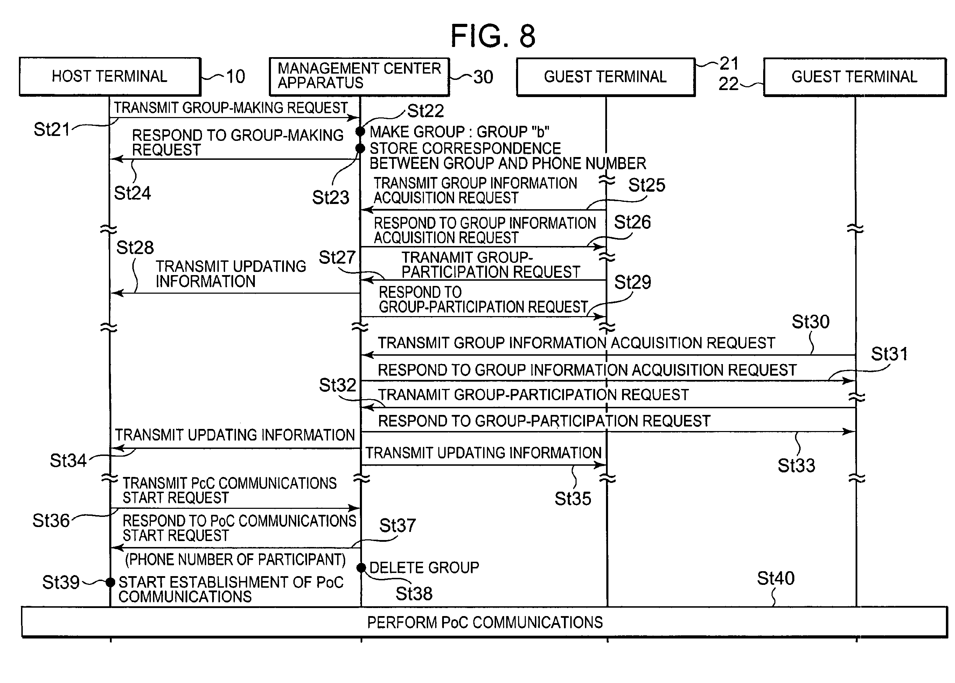

Next, referring to FIGS. 7 and 8, a second exemplary embodiment of the present invention will be described.

The first exemplary embodiment has been described by way of free participation type PoC communications which use the two PoC terminals (host and guest terminals) . However, the second exemplary embodiment is applied to free participation type PoC communications which use three or more PoC terminals. Functions and internal configurations of host and guest terminals and a management center apparatus are similar to those of the first exemplary embodiment, and thus detailed description thereof will be omitted.

Referring to FIG. 7, this embodiment includes a host terminal 10 having a PoC function, two guest terminals 21 and 22 having PoC function, and a management center apparatus 30. The host terminal 11, the guest terminals 21 and 22, and the management center 30 are interconnected through a network 100 such as the Internet.

Next, referring to,a flowchart of FIG. 8, an operation of this embodiment will be described in detail.

First, as described above, the host terminal 10 transmits, by the PoC communications circuit 14, a request for making a free participation type PoC group to the management center apparatus 30 via the wireless communications circuit 12 through the network 100 (Step St21). Accordingly, after the management center apparatus 30 has received the request via the communications circuit 32, the controller 31 makes a free participation type PoC group "b" (Step St22), and stores correspondence between the made PoC group "b" and the phone number of the host terminal 10 in the PoC group maker management table 34 (Step St23). Subsequently, in response to the PoC group-making request, the management center apparatus 30 returns a message indicating that the requested PoC group "b" has been made by the management center apparatus 30 to the host terminal 10 via the communications circuit 32 through the network 100 (Step St24).

On the other hand, the guest terminal 21 transmits, by the PoC communications circuit 14, a free participation type PoC group information acquisition request to the management center apparatus 30 via the wireless communications circuit 1.2 through the network 100 (Step St25). After the management center apparatus 30 has received the request via the communications circuit 32, the controller 31 obtains information of all free participation type PoC groups from the PoC group maker management table 34, and returns the obtained information to the guest terminal 21 via the communications circuit 32 through the network 100 (Step St26) .

Subsequently, the guest terminal 21 transmits, by the PoC communications circuit 14, a participation request to participate in the free participation type PoC group "b" to the management center apparatus 30 via the wireless communications circuit 12 through the network 100 (Step St27). After the management center apparatus 30 has received the request via the communications circuit 32, the controller 31 stores correspondence between the free participation type PoC group "b" and the phone number of the guest terminal 21 in the PoC group participant management table 35 to update the table 35. After the phone number of the guest terminal 21 has been updated to the free participation type PoC group "b", the management center apparatus 30 sends the updating information to the host terminal 10 of the corresponding free participation type PoC group "b" via the communications circuit 32 through the network 100 (Step St28) . Then, the management center apparatus 30 sends a response to the participation request to the guest terminal 21 via the communications circuit 32 through the network 100 (Step St29).

In a similar manner, the guest terminal 22 also transmits, by the PoC communications circuit 14, a free participation type PoC group information acquisition request to the management center apparatus 30 via the wireless communications circuit 12 through the network 100 (Step St30). After the management center apparatus 30 has received the request via the communications circuit 32, the controller 31 obtains information of all free participation type PoC groups from the PoC group maker management table 34, and returns the obtained information to the guest terminal 22 via the communications circuit 32 through the network 100 (Step St31).

Subsequently, the guest terminal 22 transmits, by the PoC communications circuit 14, a participation request to participate in the free participation type PoC group "b" to the management center apparatus 30 via the wireless communications circuit 12 through the network 100 (Step St32). After the management center apparatus 30 has received the request via the communications circuit 32, the controller 31 stores correspondence between the free participation type PoC group "b" and the phone number of the guest terminal 22 in the PoC group participant management table 35 to update the table 35. After the phone number of the guest terminal 22 has been updated to the free participation type PoC group "b", the management center apparatus 30 sends the updating information to the host terminal 10 of the corresponding free participation type PoC group "b" via the communications circuit 32 through the network 100 (Step St34). Then, the management center apparatus 30 sends a response to the participation request to the guest terminal 21 via the communications circuit 32 through the network 100 (Step St35).

Subsequently, the host terminal 10 transmits, by the PoC communications circuit 14, a request to start free participation type PoC communications to the management center apparatus 30 via the wireless communications circuit 12 through the network 100 (Step St36). Then, after the management center apparatus 30 has received the request via the communications circuit 32, the controller 31 retrieves and reads the phone numbers of the guest terminals 21 and 22 participating in the free participation type PoC group "b" of the host terminal 10 from the PoC group participant management table 35 and transmits the phone numbers to the host terminal 10 via the communications circuit 32 through the network 10 (Step St37). Subsequently, the management center apparatus 30 deletes the transmitted phone numbers of the guest terminals 21 and 22 from the PoC group participant management table 35 (Step St38).

Finally, the host terminal 10 becomes an originator, and establishes PoC connection with the guest terminals 21 and 22 to start PoC communications by using the phone numbers of the guest terminals 21 and 22 which participate in the PoC group "b", sent from the management center apparatus 30 (Step St39). Accordingly, PoC communications are carried out between the host terminal 10 and the guest terminals 21 and 22 (all participating members) (Step St40).

Thus, according to this embodiment, as in the first exemplary embodiment, even when a phone number of a PoC communication counterpart is not known beforehand, it is possible to carry out PoC communications with an optional counterpart.

According to this embodiment, the two guest terminals participate in the free participation type PoC group. Needless to say, however, this case is in no way limitative of the present invention, and the invention can be applied to a case where three or more guest terminals participate in the free participation type PoC group.

### 3. Third Exemplary Embodiment

A PoC system of the present invention includes a management center apparatus, and a plurality of terminals connected to the management center apparatus so as to be able to communicate therewith through a network and having PoC functions of carrying out PoC communications in a PoC group. The plurality of terminals include a first terminal used by an originator of the PoC group, and a second terminal used by a participant in the PoC group. The first terminal includes a group-making request means for transmitting a request for making a PoC group together with a phone number of its own terminal to the management center apparatus, a PoC communications start request means for transmitting a request to start PoC communications to the management center apparatus before PoC communications are started, and a PoC communications means for carrying out PoC communications by using a phone number of the second terminal sent from the management center apparatus. The second terminal includes a group participation request means for transmitting a PoC group-participation request together with a phone number of its own terminal to the management center apparatus, and a PoC communications means for carrying out PoC communications with the first terminal. The management center apparatus includes a storage means for making a PoC group in response to the PoC group-making request and associating the made PoC group with the received phone number of the first terminal to store them in a table, an updating means for associating the PoC group with the received phone number of the second terminal to update the table in response to the PoC group-participation request, and a phone number transmission means for transmitting the phone number of the second terminal associated with the PoC group based on the table to the first terminal in response to the request to start PoC communications.

### 4. Fourth Exemplary Embodiment

The present invention provides a communication method for a PoC system which includes a management center apparatus, and a plurality of terminals connected to the management center apparatus so as to be able to communicate therewith through a network and having PoC functions of carrying out PoC communications in a PoC group. The plurality of terminals includes a first terminal used by an originator of the PoC group, and a second terminal used by a participant in the PoC group. The communication method includes a step of transmitting, by the first terminal, a request for making a PoC group together with a phone number of its own terminal to the management center apparatus, a step of making, by the management center apparatus, a PoC group in response to the PoC group-making request and associating the made PoC group with the received phone number of the first terminal to store them in a table, a step of transmitting, by the second terminal, a.PoC group-participation request together with a phone number of its own terminal to the management center apparatus, a step of associating, by the management center apparatus, the PoC group with the received phone number of the second terminal to update the table in response to the PoC group-participation request, a step of transmitting, by the first terminal, a request to start PoC communications to the management center apparatus before PoC communications are started, a step of transmitting, by the management center apparatus, the phone number of the second terminal associated with the PoC group based on the table to the first terminal in response to the request to start PoC communications, a step of starting, by the first terminal, PoC communications by using the phone number of the second terminal sent from the management center apparatus, and a step of carrying out, by the second terminal, PoC communications with the first terminal.

This embodiment has been described by way of example where the host terminal obtains the phone number of the guest terminal from the management center apparatus to carry out PoC communications. However, a general identifier may be used in place of the phone number.

The previous description of these embodiments is provided to enable a person skilled in the art to make and use the present invention. Moreover, various modifications to the embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by the limitations of the claims and equivalents.

## Claims

1. A push-to-talk over cellular (PoC) system comprising:
a first mobile terminal;
a second mobile terminal; and
a management center apparatus,
wherein said first mobile terminal comprises:
a first wireless communications circuit to receive a PoC communications start response including an identifier of said second mobile terminal from said management center apparatus; and
a PoC communications circuit to communicate with said second mobile terminal through PoC communications,
wherein said second mobile terminal comprises:
a second wireless communications circuit to transmit a group-participation request including the identifier of said second mobile terminal to said management center apparatus, and
wherein said management center apparatus comprises:
a controller to register the identifier of said second mobile terminal.

2. A PoC system according to claim 1,
wherein said first mobile terminal further comprises:
a request transmitter to transmit a request to start PoC communications to said management center apparatus.

3. A PoC system according to claim 1,
wherein the identifier is a phone number.

4. A PoC system according to claim 1,
wherein said first mobile terminal further comprises:
a group-making request transmitter to transmit a request for making a PoC group to said management center apparatus, and
wherein said management center apparatus further comprises:
a group maker to make said PoC group, and
wherein said controller registers the identifier of said second mobile terminal in said PoC group.

5. A PoC system according to claim 1,
wherein said second mobile terminal further comprises:
an information receiver to receive information of a plurality of PoC groups from said management center apparatus, and
wherein said second wireless communications circuit transmits to said management center apparatus a group-participation request to participate in one of said plurality of PoC groups and the identifier of said second mobile terminal.

6. A method for use in a PoC system having a first mobile terminal, a second mobile terminal, and a management center apparatus, comprising:
said second mobile terminal transmitting a group-participation request including an identifier of said second mobile terminal to said management center apparatus;
said management center apparatus registering the identifier of said second mobile terminal;
said first mobile terminal receiving a PoC communications start response including the identifier of said second mobile terminal from said management center apparatus; and
said first mobile terminal establishing communications with said second mobile terminal through PoC communications.

7. A method for use in a PoC system according to claim 6, further comprising:
said first mobile- terminal transmitting a request for making a first PoC group to said management center apparatus;
said management center apparatus making said first PoC group;
said second mobile terminal receiving information of a plurality of PoC groups including said first PoC group from said management center apparatus; and
said second mobile terminal transmits to said management center apparatus a group-participation request to participate in said first PoC group and the identifier of said second mobile terminal.

8. A management center apparatus comprising:
a communications circuit that communicates with a first mobile terminal and a second mobile terminal; and
a controller that controls said communications circuit,
wherein said controller registers the identifier of said second mobile terminal and transmits a PoC communications start response including the identifier of said second mobile terminal to said first mobile terminal.

9. A management center apparatus according to claim 8,
wherein said controller makes a first PoC group, transmits information of a plurality of PoC groups including said first PoC group to said second mobile terminal, and registers the identifier of said secondmobile terminal in said first PoC group.

10. A host mobile terminal comprising:
a wireless communications circuit that communicates with a guest mobile terminal through PoC communications; and
a controller that controls said wireless communications circuit,
wherein said controller receives a PoC communications start response including an identifier of said guest mobile terminal from a management center apparatus, and communicates with said guest mobile terminal through PoC communications.

11. A host mobile terminal according to claim 10,
wherein said controller transmits a request for making a PoC group to said management center apparatus.

12. A guest mobile terminal comprising:
a wireless communications circuit that communicates with a host mobile terminal through PoC communications; and
a controller that controls said wireless communications circuit,
wherein said controller transmits a group-participation request including an identifier of said guest mobile terminal to a management center apparatus.

13. A guest mobile terminal according to claim 12,
wherein said controller receives information of a plurality of PoC groups from management center apparatus, and transmits to said management center apparatus a group-participation request to participate in one of said plurality of PoC groups and the identifier of said guest mobile terminal.

14. A PoC (Push-to-talk over cellular) system comprising:
a first mobile terminal;
a second mobile terminal; and
a management center apparatus,
wherein said first mobile terminal comprises:
first wireless communications means for receiving a PoC communications start response including an identifier of said second mobile terminal from said management center apparatus; and
PoC communications means for communicating with said second mobile terminal through PoC communications,
wherein said second mobile terminal comprises:
second wireless communications means for transmitting a group-participation request including the identifier of said second mobile terminal to said management center apparatus, and
wherein said management center apparatus comprises:
control means for registering the identifier of said second mobile terminal.
